(19) Europäisches Patentamt
European Patent Office
Office européen des brevets

(11) EP 0 589 167 B1

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(51) Int Cl.[6]: **C07F 15/02**, C07F 15/04, C07F 15/06, C08G 59/18, C08G 59/70, C08G 18/22, C08G 71/04, C07F 3/00

(21) Anmeldenummer: **93111521.6**

(22) Anmeldetag: **19.07.1993**

(54) **Verfahren zur Herstellung von Metallneutralkomplexen mit hoher Koordinationszahl in einem kontinuierlichen Verfahren und deren Verwendung**

Process for the preparation of neutral metal complexes with high coordination number in a continuous process and their use

Procédé de préparation de complexes métalliques neutres avec un nombre de coordination grand en continue et leur application

(84) Benannte Vertragsstaaten:
**AT BE CH DE ES FR GB IT LI NL SE**

(30) Priorität: **22.09.1992 DE 4231622**

(43) Veröffentlichungstag der Anmeldung:
**30.03.1994 Patentblatt 1994/13**

(73) Patentinhaber: **Bakelite AG**
**58642 Iserlohn-Letmathe (DE)**

(72) Erfinder:
- **Böttcher, Axel, Dr.**
  **D-46483 Wesel (DE)**
- **Döring, Manfred, Dr.**
  **D-07749 Jena (DE)**
- **Zehrfeld, Jürgen, Dr.**
  **D-46562 Voerde (DE)**

(56) Entgegenhaltungen:
**DE-A- 3 201 381**
**FR-A- 2 075 880**
**US-A- 4 105 667**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 589 167 B1

Printed by Jouve, 75001 PARIS (FR)

## Beschreibung

Die Erfindung betrifft ein neues Verfahren zur Herstellung neuer Komplexverbindungen mit zusätzlichen als Basen wirkenden Liganden, sowie deren Verwendung als gezielt einsetzbare, latente Polymerisationskatalysatoren.

Aus der Literatur ist eine Vielzahl verschiedener, metallorganischer Komplexverbindungen bekannt, die als Katalysatoren, Beschleuniger, Initiatoren und ähnliches für organische Reaktionen eingesetzt werden.

In neuerer Zeit haben Chelatkomplexe der Übergangsmetalle mit Diketonen, Dithiocarbamidsäurederivaten, Dihydroxyverbindungen, Diaminen oder anderen difunktionellen Liganden besonders an Bedeutung als Katalysatoren für Polymerisations- und Härtungsreaktionen gewonnen.

Die Herstellung solcher einfachen, neutralen Übergangskomplexe ist beispielsweise in den Patentschriften US-A 4 337 210, US-A 4 338 254, US-A 4 008 260 oder US-A 4 279 829 beschrieben.

Übergangsneutralkomplexe, in denen Liganden unterschiedlicher Natur um ein Zentralatom koordiniert sind, lassen sich bisher in aufwendigen Verfahren herstellen, wobei in einem ersten Schritt hergestellte, wasserfreie, lösungsmittelfreie Übergangsmetallkomplexe im zweiten Verfahrensschritt mit zusätzlichen Liganden, wie z. B. Pyridin, Butylamin oder Benzylamin, koordiniert werden (Olszewski, E. J; Martin, D. F.; J. Inorg. Nucl. Chem. 27, 1043-1048 (1965).

Zwar wurden auch Verfahren beschrieben, durch die solche gemischt koordinierten Komplexe in einem einstufigen Verfahren hergestellt werden können, jedoch werden zur Durchführung teure Übergangsmetallacetate benötigt. Außerdem werden sehr schwankende Ausbeuten zwischen 20 und 88 % erzielt, so daß die Durchführung im technischen Maßstab sich als unwirtschaftlich erweist (Bereman, R. D. et.al. Inorg. Chim. Acta 130, 195-201 (1987).

Bekannt ist auch ein einstufiges Verfahren aus der Schrift DD-A5-292 463. Jedoch muß bei diesem Verfahren in teuren organischen Lösungsmitteln oder -gemischen in Gegenwart von organischen Hilfsbasen, wie z. B. Tributylamin oder anderen tertiären Aminen, gearbeitet werden.

Bei diesem Verfahren wirkt sich das Lösungsverhalten der gebildeten Komplexe nachteilig aus. Da die erhaltenen Neutralkomplexe zum Teil in den eingesetzten Lösungsmitteln löslich sind, müssen Ausbeuteeinbußen in Kauf genommen werden, die nicht durch Einengen wettgemacht werden können. Außerdem müssen die anfallenden Mengen an verunreinigten Lösungsmitteln entsorgt oder teuer wiederaufgearbeitet werden. Das gleiche gilt für die als Nebenprodukt entstehenden Ammoniumsalze.

Ein Nachteil dieses Verfahrens ist es auch, daß gerade diese, teils geruchsintensiven Ammoniumsalze in geringen Mengen dem Endprodukt anhaften und eine zusätzliche Reinigung erforderlich machen.

Aber nicht nur die Herstellung bisher bekannter metallorganischer Komplexverbindungen ist mit Mängeln behaftet, auch bei ihrer Verwendung als Polymerisations- oder Härtungskatalysatoren zur Herstellung hochwertiger Produkte, treten Probleme auf, die bisher nur durch die Zugabe weiterer Additive oder durch eine aufwendige, zeitintensive Temperatur- und Druckführung halbwegs gelöst werden können.

Werden beispielsweise die aus US 4 487 914 bekannten Addukte, bestehend aus Imidazol oder aus substituierten Imidazolen, einer Epoxidverbindung und einem Metallsalz, als Härtungskatalysator für Epoxidharze verwendet, treten während der Aushärtungsreaktion außerordentlich starke Temperaturerhöhungen auf, die zu Verfärbungen des Produkts, zu partiellen Verkohlungen und zu Inhomogenitäten im ausgehärteten Material führen.

Der Zusatz von Lösungsmitteln zur Herabsetzung der hohen Reaktivität nach dem Anspringen der Polymerisationsreaktion, wie es in DE-OS 23 10 428 beschrieben ist, führt ebenfalls zu keiner befriedigenden Lösung, da die spätere Entfernung zusätzliche Verarbeitungsschritte erforderlich macht und die ausgehärteten Produkte unerwünschte Hohlräume aufweisen, die die Aufnahmefähigkeit von Wasser oder anderen Lösungsmitteln steigern. Aus der erhöhten Flüssigkeitsaufnahmefähigkeit resultiert eine signifikante Verschlechterung der elektrischen und mechanischen Eigenschaften des Polymers.

Während die aus den Patentschriften US 3 638 007, US 3 792 016, US 4 101 514 und DE 23 00 489 bekannten Imidazol-Metall-Komplexe als latente Härter erst bei Temperaturen höher als 170 °C wirksam werden und Imidazol abspalten, und damit durch unerwünschte Nebenreaktionen verminderte Produktqualitäten bedingen, ist es möglich, mit den aus PCT/WO 91/00419 bekannten, neutralen Metallkomplexen Polymergemische herzustellen, die bei Raumtemperatur stabil und lagerfähig sind, jedoch bereits bei Temperaturen höher 50 °C zu hochwertigen Produkten aushärten. Nachteil dieser Katalysatoren ist jedoch, daß nach dem Anspringen der Reaktion direkt eine völlige Aushärtung erfolgt. Eine stufenweise Aushärtung, die es beispielsweise erlaubt, lagerfähige Prepregs unter Verwendung nur eines einzelnen Härtungssystems herzustellen, ist nicht möglich.

Aufgabe der Erfindung ist es daher, ein einfach durchzuführendes umweltfreundliches Verfahren zur Verfügung zu stellen, das es ermöglicht, aus preiswerten Metallsalzen in einer einstufigen Reaktion in wäßrigem Medium, das anschließend keiner weiteren Aufarbeitung, bzw. Reinigungsoperation bedarf, Übergangsmetallkomplexe, in denen verschiedene Liganden unterschiedlicher chemischer Struktur um ein Zentralatom koordiniert sind, in nahezu quantitativen Ausbeuten und hoher Reinheit herzustellen, so daß aufwendige Reinigungsverfahren entfallen können.

Aufgabe der Erfindung ist es weiterhin, einen Härtungskatalysator zur Verfügung zu stellen, durch den ein latent härtendes Polymergemisch hergestellt werden kann, das bei Raumtemperatur lagerstabil ist, bei geringfügig erhöhten

Temperaturen teilweise aushärtet, so daß daraus in einfacher Weise vorgehärtete Vorprodukte hergestellt werden können, die erst nach ihrer endgültigen Formgebung bei erhöhten Temperaturen aushärten.

Die Lösung der Aufgabe erfolgt durch ein Verfahren gemäß der Ansprüche 1 bis 12, wodurch neutrale Komplexe gemäß Anspruch 13 hergestellt werden können, die als alleinige Härtungskatalysatoren für lagerstabile Prepregs gemäß der Ansprüche 14 bis 17 verwendet werden können.

Der Einsatz von organischen Hilfsbasen ist in der organischen Chemie weit verbreitet. Zur Synthese von Säureamiden oder Estern wird zum Beispiel eine Hilfsbase benötigt, die oft gleichzeitig als Lösungsmittel, bzw. als Reaktionsmedium dienen kann. Aufgrund der sterischen und elektronischen Einflüsse wirkt sich dieses recht unterschiedlich auf die erzielten Ausbeuten und Reinheiten der Produkte aus.

Es wurde nun gefunden, daß durch den Einsatz von anorganischen Hilfsbasen, wie NaOH, KOH, $Ca(OH)_2$, $Mg(OH)_2$ oder basischen Salzen, wie z. B. Natriumacetat, Soda oder Pottasche, Natorn, $CaCO_3$ in Wasser, welches eventuell bei Unlöslichkeit des Chelatliganden oder der zu bindenden, als Lewis-Basen wirkenden Liganden, mit einem Lösevermittler, wie etwa Alkohol versetzt ist, aus Metallsalzen in Gegenwart von verschiedenartigen Komplexbildnern schwerlösliche, Metallkomplexe, insbesondere solche mit hoher Ligandenzahl oder gemischt koordinierte Metallkomplexe gebildet werden, die in nahezu quantitativer Ausbeute und besonders hoher Reinheit ausgefällt werden, während die Kationen der verwendeten Hilfsbasen mit den Säurerestionen wasserlösliche Salze bilden und in Lösung bleiben.

Es wurde weiterhin gefunden, daß durch einen hohen Energieeintrag, hervorgerufen durch Einwirkung hoher Scherkräfte, wie sie durch eine extrem hohe Rührerdrehzahl, oder im Dissolver auftreten, sowohl die Bildung der Komplexe selbst als auch der ausfallenden Kristalle stark beschleunigt werden. Der Energieeintrag kann aber auch durch Einwirkung von Ultraschall, Mikrowelle oder Laserstrahl erfolgen. Während üblicherweise die Ausfällung der Komplexsalze erst nach einer gewissen Wartezeit erfolgt, können die so gebildeten Komplexe sofort abgetrennt werden, so daß ihre Herstellung in einem kontinuierlichen Verfahren erfolgen kann.

Es wurde ebenfalls gefunden, daß diese Metallneutralkomplexe Lewis-Basen partiell unter Einwirkung von Energie freigeben und somit eine Epoxidharzhärtung stufenweise gestaltet werden kann.

Als Komplexbildner können ungeladene, einfache Lewis-Basen mit einem freien Elektronenpaar, mehrzähnige Chelatbildner, daß heißt, Verbindungen, die mehr als eine Koordinationsstelle am Zentralatom besetzen können, allein oder im Gemisch verwendet werden, wobei im letzteren Fall Komplexe entstehen, in denen das zentrale Metallion nicht nur von einer Ligandenart sondern gemischt koordiniert ist. Dabei werden identische, gemischt koordinierte Komplexe bei jeweils gleichem molaren Verhältnis der eingesetzten Komplexbildner erhalten. Vorteilhaft ist, daß diese Komplexe in einem einstufigen Verfahren aus wäßrigen Lösungen ausgefällt werden können und daß nach deren Abtrennung überschüssige Mutterlauge erhalten wird, die sich in einfacher Weise aufarbeiten läßt oder nach der Ausfällung der Salze wieder verwertet werden kann, bzw. direkt wieder einsetzbar ist.

Von besonderem Vorteil ist, daß durch die Verwendung anorganischer Basen einheitliche, geruchlose Komplexe reproduzierbar in hoher Reinheit und hohen Ausbeuten erhalten werden, die eine feine pulverige Konsistenz aufweisen und sich bei Verwendung als latente Härtungsbeschleuniger für Epoxid-Harze auch nach längerer Lagerzeit leicht dosieren und gleichmäßig im Harz verteilen und lösen lassen, während durch bisher verwendete aminische Hilfsbasen unangenehm riechende, zum Verbacken neigende Produkte erhalten werden, die durch ebenfalls gebildete Aminkomplexe verunreinigt sind und sich nach längerer Lagerzeit schlecht dosieren lassen, und gegenüber dem Harz eine relativ geringe Latenz aufweisen.

Die erfindungsgemäßen, evtl. gemischt koordinierten Metallkomplexe lassen sich gemäß der folgenden, allgemein formulierten, einstufigen Reaktion herstellen, wobei die Reaktanden in stöchiometrischen Mengen eingesetzt werden:

$$M_m^{a+}(SR^{b-})_n + m\,[x\,L \cdot cH + yB] \xrightarrow{\text{anorg. Base}} m\{L_xMB_y[SR]_{p-o} + o \cdot SR^{b-} + c \cdot H^+\}$$

mit

- M ein Metallion,
- SR ein Säurerest einer organischen oder anorganischen Säure,
- B eine Lewis-Base und
- L ein Chelatligand, wobei

$$m \cdot a = b \cdot n \geq m\,(c \cdot x)$$

$$x \cdot c \leq a \text{ und } \frac{n}{m} = p,\ o \leq p,\ m \cdot o \leq n \text{ und}$$

a = eine natürliche Zahl im Bereich von 1 - 8,
b = eine natürliche Zahl im Bereich von 1 - 3,
c = eine natürliche Zahl im Bereich von 0 - 4,
m = eine natürliche Zahl im Bereich von 1 - 3,
n = eine natürliche Zahl im Bereich von 1 - 8,
o = eine natürliche Zahl im Bereich von 0 - 8,
x = eine natürliche Zahl im Bereich von 0 - 4,
y = eine natürliche Zahl im Bereich von 8 - 15,

bevorzugt 9 - 11, bedeuten, und
$x + y + (p - o) \leq 16$, bevorzugt $x + y + (p - o) \leq 12$ ist.

Als Metallion ($M^{a+}$) kann im Prinzip jedes komplexbildende Metallion dienen, insbesondere aber die Ionen der 2. und 3. Hauptgruppe des Periodensystems der Elemente sowie die Metallionen der Nebengruppenelemente.

Bevorzugte Metallionen sind Kobalt- Nickel-, Eisen-, Zink- oder Manganionen, die in Form von preiswerten Metallsalzen zur Herstellung der erfindungsgemäßen Komplexe eingesetzt werden.

Beispiele für einsetzbare Metallsalze sind Kupfer-(I)- und -(II)-salze wie Kupferchlorid, Kupferbromid, Kupferfluorid, Kupfernitrat, Kupferfluorborat, Kupfersulfat, Kupferacetat, Kupfertriflouracetat, Kupferstearat, Kupferoctoat, Kupfermethacrylat, Kupfermalonat, Kupferbenzoat; Nickelsalze, wie Nickelchlorid, Nickelfluorid, Nickelsulfat, Nickelfluorborat, Nickeltallat, Nickelstearat oder Nickelsalze anderer organischer Säuren, wie z. B. der Ricinolsäure; Kalziumsalze, wie Kalziumchlorid, Kalziumbromid; Kobaltsalze wie Kobaltchlorid, Kobaltfluorid, Kobaltnitrat, Kobaltsulfat, Kobaltoctoat, Kobaltfluorborat, Kobaltstearat; Zinksalze wie Zinkbromid, Zinkchromat, Zinkchlorid, Zinkstearat, Zinkoctoat, Zinkethylhexoat; Quecksilbersalze wie Quecksilberbromid oder -chlorid, Zirkoniumsalze wie Zirkoniumsulfat oder Zirkoniumchlorid; Indiumsalze wie Indiumfluorborat; Silbersalze wie Silbernitrat; Chromsalze wie Chromchlorid; Mangansalze wie Manganchlorid, Mangansulfat; Zinnsalze wie Zinnchlorid, Cadmiumsalze wie Cadmiumchlorid, Eisensalze wie Eisenchlorid, Titansalze wie Titanchloride; Vanadiumsalze wie Vanadiumchlorid, Antimonsalze wie Antimonchlorid und ähnliche.

Selbstverständlich sind die aufgezählten Salze nur ein kleiner Teil der im Verfahren einsetzbaren Metallsalze. Bevorzugt werden preiswerte, anorganische Salze zur Herstellung der erfindungsgemäßen Härtungskatalysatoren verwendet.

Gut geeignet sind jedoch auch alle Salze organischer Säuren, die einen pK-Wert von etwa 1,2 bis 5,7 (bezogen auf eine 0,1 N Lösung) aufweisen, und zwar z. B. die der Essigsäure, Oxalsäure, Milchsäure, Weinsäure, Apfelsäure, Fumarsäure, Malonsäure oder anderer geeigneter organischer Säuren. Dementsprechend kommen als Säurereste (SR) alle oben beschriebenen Säurereste in Betracht.

Als Chelatliganden L können im Prinzip alle anderen organischen Verbindungen eingesetzt werden, die mindestens zwei Atomgruppierungen mit freien Elektronenpaaren oder Elektronenlücken zur Bildung von Komplexbindungen besitzen. Beispiele hierfür sind Dioxime, alpha- und β-Hydroxycarbonylverbindungen, also Hydroxycarbonsäuren, -ketone, -aldehyde und deren Analoge oder enolisierbare 1,3-Diketone, aber auch CH-acide, Lewis-Basen wie Malonsäure-diester oder -dinitril, Acetessigsäureester oder Cyanessigsäureester.

Bevorzugte Chelatliganden sind Acetylaceton, Benzoylaceton und deren Homologe, Dipivaloylmethan oder Dimethylglyoxim.

In den erfahrungsgemäßen Metallkomplexverbindungen können Lewis-Basen (B) alle nucleophilen Moleküle oder Ionen sein, die ein einsames Elektronenpaar aufweisen. Beispiele dafür sind Pyridin-, Pyrimidin - oder Imidazolverbindungen, Ether, einschließlich cyclischer Ether, wie z. B. Tetrahydrofuran, aliphatische und aromatische Alkohole, Ketone, Thioether oder Merkaptane.

Lewis-Basen können in den Komplexen gemäß der Formel $L_XMB_Y$aber auch CH-acide Verbindungen sein, die als Lewis-Basen vorliegen, d. h., CH-acide Verbindungen, bei denen ein Proton abgespalten ist. Beispiele für derartige CH-acide Lewis-Basen sind z. B. CH-acide Pyridine oder Nitromethan.

Der Ladungsausgleich der Metallkationen der einzusetzenden Metallkomplexverbindungen kann sowohl durch die Liganden selbst, als auch durch ionische Lewis-Basen erfolgen. Dabei versteht es sich, daß sich die Zahl der ladungstragenden Liganden reduziert, wenn der Komplex ionische Lewis-Basen enthält.

Eine weitere Ausgestaltung der erfindungsgemäß hergestellten Komplexe besteht darin, daß die CH-aciden Lewis-Basen über Stickstoff- und/oder Sauerstoff- und/oder Schwefel- und/oder Phosphor-Atome, bzw. Wasserstoffbrücken an die Metallchelat-Verbindung gebunden sind.

Die Umsetzung der Ausgangsverbindungen erfolgt bei Temperaturen von 0 bis 200 °C, vorzugsweise bei 20 bis 80 °C. Zur Durchführung des Verfahrens werden das Metallsalz, die als Chelatligand wirkende organische Verbindung und die zusätzlich zu bindende Lewis-Base gemeinsam mit der anorganischen Lauge oder dem basisch wirkenden Salz mit Wasser und evtl. einem Lösungsvermittler vermischt und auf die gewünschte Temperatur gebracht. Dabei kann der hohe Energieeintrag durch Hochgeschwindigkeitsrührer, wie z. B. durch einen Ultra-Turrax, durch Mischsirenen oder Ultraschallquellen oder auf andere Weise erfolgen. Auf diese Weise kann die Verweilzeit des Reaktionsgemischs im Reaktor auf wenige Minuten gesenkt werden und die unmittelbar nach ihrer Bildung auskristallisierenden Komplexe abgetrennt werden.

Aufgrund der kurzen Reaktionszeit und der schnell erfolgenden Auskristallisation des Produkts läßt sich die Umsetzung in einfacher Weise kontinuierlich durchführen, wobei die Produktabtrennung in üblicher Weise, z. B. durch Filtrieren, Zentrifugieren oder Sedimentation, erfolgt.

Als mögliche Reaktionsgefäße mit entsprechenden Einbauten für den hohen Energieeintrag können sowohl kontinuierlich betriebene Rohrreaktoren verschiedener Ausführung, denen im einfachsten Fall kleine Mischkammern vorgeschaltet sein können, als auch Schlaufenreaktoren mit Zwangsumlauf oder einfache Rührreaktoren, mit oder ohne Einbauten, jedoch ausgestattet mit einer geeigneten Energieeintragsmöglichkeit, in Kaskade dienen. Besonderer Vorteil dieses kontinuierlich durchführbaren Verfahrens ist die Möglichkeit, aus verdünnten wäßrigen Lösungen die gewünschten Komplexe ohne vorherige Aufkonzentrierung schnell auskristallisieren zu können und dabei ein besonders reines Produkt zu erhalten, das ohne weitere Aufarbeitung als Polymerisations- oder Härtungskatalysator einsetzbar ist. Es handelt sich dabei um ein feinteiliges, rieselfähiges Produkt, das auch nach längerer Lagerzeit nicht zum Verbacken neigt. Soll der abgetrennte Komplex nicht sofort weiterverwendet werden, empfiehlt es sich, es zu trocknen. Dieses kann kontinuierlich in einem Dünnschichttrockner oder Schaufeltrockner erfolgen.

Besonders vorteilhaft gestalten sich die Verfahrensparameter, wenn die Metallionen in der Reaktionslösung Konzentrationen von etwa 6 bis 70 % der durch das eingesetzte Salz erzielbaren maximalen Lösungskonzentration besitzen und die jeweiligen Komplexbildner, d. h., Chelatbildner und Lewis-Basen, in stöchiometrischen Mengen zugefügt werden. Letztere werden je nach gewünschtem Komplex derart hinzugefügt, daß das molare Verhältnis zwischen Metallion, Chelatligand und Lewis-Base bei 1:(1 - 4):(2 - 16), insbesondere 1:(1 - 4):(8 - 12) liegt. Bei der Herstellung der Reaktionsgemische sind die Konzentrationen der einzelnen Reaktionspartner und die der Hilfsbase so zu wählen, daß eine verdünnte Lösung erhalten wird, deren Gesamtkonzentration das Löslichkeitsgleichgewicht nicht überschreitet. Eine schnelle Komplexbildung erfolgt besonders dann, wenn die Konzentration der Hilfsbase derjenigen der Lewis-Base entspricht.

Als Lösevermittler für schwerlösliche Chelatbildner oder Lewis-Basen können organische Lösungsmittel, wie Ethanol, Propanol, Dimethylformamid oder andere in einer Menge von 0,01 bis 20 Gew.-%, insbesondere von 5 bis 10 Gew.-%, bezogen auf das Gesamtgemisch hinzugefügt werden.

Sollen Komplexe mit besonders hoher Koordinationszahl hergestellt werden, ist es möglich, nach einer gewissen Reaktionszeit, die den Schluß zuläßt, daß alle in der Lösung vorgelegten Reaktionspartner ausreagiert sind, weiteren Chelatliganden oder weitere Lewis-Basen zuzuspeisen und die Reaktionslösung erneut einem hohen Energieeintrag auszusetzen. Auf diese Weise kann die Koordinationszahl weiter erhöht, sprich die zweite Koordinationssphäre besetzt werden, in der üblicherweise in hydrathaltigen Kristallen Wassermoleküle gebunden sind.

Besonders vorteilhaft läßt sich dieses in einem Rohrreaktor mit mehrfachen Zuspeisungsmöglichkeiten durchführen.

Hergestellt werden können durch das beschriebene Verfahren unter anderem folgende Komplexe:

- Bis(benzoylacetonato)nickel(II)diimidazol
- Bis(benzoylacetonato)eisen(II)dipyrazol
- Bis(benzoylacetonato)zink(II)tetra-hydrat
- Bis(trifluorbenzoylacetonato)-cobalt(II) tetrabenzimidazol
- Bis(hexafluoroacetylacetonato)-nickel(II) tetrapyrazol

So hergestellte Neutralkomplexe lassen sich aufgrund ihrer feinteiligen Beschaffenheit besonders gut in den auszuhärtenden Polymergemischen auf der Basis von Epoxidharzen oder Polyurethanharzen lösen und führen nach dem Anspringen der Härtungsreaktion zu besonders kurzen Härtungszeiten. Dabei erfolgt die Aushärtung der Harze bei Temperaturen zwischen 40 und 180 °C, insbesondere zwischen 60 und 140 °C.

Aushärtungsversuche mit Komplexsalzen, die eine besonders hohe Koordinationszahl aufweisen, bzw. mit solchen, bei denen die Lewis-Basen in einer zweiten Koordinationssphäre gebunden sind, zeigen zwei Aushärtungsstufen, und zwar insbesondere dann, wenn niedrige Komplexkonzentrationen verwendet werden.

Dieses ist von besonderem Vorteil, da auf diese Weise Harzsysteme zur Herstellung von vorgehärteten Produkten zur Verfügung gestellt werden können, deren Vor- und Nachhärtung durch nur einen Härtungskatalysator hervorgerufen werden kann. Außerdem wird durch diese Möglichkeit eine Wechselwirkung zwischen den bisher verwendeten Katalysatorsystemen zur Vor- und Nachhärtung vermieden, so daß gerade aus diesem Grund die neuen Komplexverbindungen in niedrigen Konzentrationen als Katalysator für beide Härtungsstufen vorgehärteter Produkte wirksam sind.

Die erfahrungsgemäßen, neutralen Komplexsalze können in Konzentrationen von 0,01 bis 50 Gew.-%, insbesondere 0,1 bis 20 Gew.-% bezogen auf das gesamte Harzgemisch, sowohl zur Härtung von Epoxidharzprodukten als auch von Polyurethanen verwendet werden.

Ausgehärtet werden können durch die erfindungsgemäßen Katalysatoren alle Epoxidverbindungen mit mehr als einer Epoxidbindung.

Bevorzugte Epoxidverbindungen sind Polyphenol-Glycidylether, z. B. epoxidierte Novolake oder die Reaktionsprodukte aus Epichlorhydrin und Bisphenol A oder Bisphenol F. Derartige Epoxidharze haben ein Epoxid-Äquivalent von 160 bis 500.

Die vorstehenden polyfunktionellen Epoxidverbindungen (dieser Ausdruck schließt auch den Begriff Epoxidharz ein) können einzeln oder im Gemisch, ggf. in Gegenwart von Lösungsmitteln vor- und nachgehärtet oder direkt ausgehärtet werden. Sie können auch im Gemisch mit Monoepoxyden (sogenannten Reaktivverdünnern) eingesetzt werden. Ebenso geeignet sind auch glycidylierte Aniline.

In der beschriebenen Weise sind die erfindungsgemäßen Katalysatoren auch als Härter für alle zu Polyurethanen vernetzenden Gemische, die Monomere, Oligomere oder Präpolymere mit freien Isocyanatgruppen enthalten, geeignet.

Entsprechende Gemische sind aus dem Kunststoff Handbuch Bd. 7, Polyurethane, Becker, G. W.; Braun, D.; Hrsg. Dr. Günter Oertel, Carl Hanser Verlag, 1983, bekannt. Zu diesen Gemischen zählen auch Mischungen mit anderen Polymeren, wie z. B. Polycarbonate, Polyacrylate, ungesättigte Polyesterharze, insbesondere jedoch mit Polyepoxiden.

Je nach Wahl der verwendeten erfindungsgemäßen Härtungskatalysatoren, werden nach der Zugabe des Katalysators lagerstabile oder bei niedrigen Temperaturen vorhärtende Harze erhalten, die bei erhöhten Temperaturen zwischen 80 bis 200 °C, insbesondere 100 bis 150 °C nach erfolgter Formgebung aushärten.

Dieses Härtungsverhalten kann ausgenutzt werden, um klebfreie Prepregs oder Prepregs eines definierten Tacks lagerstabil herzustellen, die nach der endgültigen Aushärtung besonders hohe Produktqualitäten aufweisen, da mit den erfindungsgemäßen Härtungskatalysatoren lösungsmittelfrei gearbeitet werden kann. Außerdem lassen sie sich sehr leicht, gleichmäßig mit den Harzgemischen vermischen.

Die folgenden gegebenen Beispiele dienen zur Verdeutlichung des erfindungsgemäßen Verfahrens und die dadurch herstellbaren Komplexe, jedoch sollen sie sie nicht auf diese beschränken.

Ausführungsbeispiele:

Beispiel 1

1 mol Nickel(II)nitrat · 6 $H_2O$ werden mit 2 mol Benzoylaceton, 2 mol Imidazol und 2 mol Kaliumhydroxid in 500 ml Methanol/Wasser (im Verhältnis 3 : 2) enthaltenen Rührkessel mit einem Ultra Turax (20 000 upm) innig gemischt. Nach kurzer Reaktionszeit ist das Bis(benzoylacetonato)-nickel(II)diimidazoldimethanol in einer Ausbeute von 99 % entstanden. Nach Filtration liegt der Komplex als Pulver mit einer Korngröße < 10 µm vor.

| Elementaranalysendaten: | | |
|---|---|---|
| | theoretisch [%] | ermittelt [%] |
| Ni | 10,2 | 10,1 |
| C | 58,0 | 58,2 |
| H | 5,9 | 5,8 |
| N | 9,7 | 9,9 |

Beispiel 2

1 mol Cobalt(II)chlorid · 6 $H_2O$ werden mit 2 mol Chinaldinsäure, 2 mol Pyridin und 1 mol $Na_2CO_3$ in 500 ml Ethanol/Wasser (im Verhätnis 1 : 1) unter Einwirkung von Ultraschall 10 min. schwach gerührt. Das Bis(chinaldato)-cobalt(II) dipyridin wird in einer Ausbeute von 99,5 % gebildet.

| Elementaranalysendaten: | | |
|---|---|---|
| | theoretisch [%] | ermittelt [%] |
| Co | 10,5 | 10,5 |
| C | 64,2 | 64,3 |
| H | 3,9 | 4,0 |
| N | 10,0 | 10,2 |

Beispiel 3

29 g Cobalt(II)nitrathexahydrat werden mit 43,2 g Trifluorbenzoylaceton, 47,5 g Benzimidazol und 8 g NaOH in 100 ml einer Mischung aus Aceton/Wasser (im Verhältnis 1 : 1) unter starkem rühren (1 000 upm) innig vermischt. Nach 15 min. scheidet sich der Komplex Bis(trifluorbenzoylacetonato)-cobalt(II) tetrabenzimidazol in einer Ausbeute von 96 % ab.

| Elementaranalysendaten: | | |
|---|---|---|
| | theoretisch [%] | ermittelt [%] |
| Co | 6,1 | 6,0 |
| N | 11,7 | 11,5 |
| C | 47,5 | 47,7 |

Beispiel 4

29,0 g Nickel(II)nitrathexahydrat werden mit 41,5 g Hexafluoraceton, 30 g Pyrazol und 11,2 g KOH in 90 ml Wasser mit 10 ml Methanol innig (500 upm) gemischt. Nach 15 min. Rühren ist der Komplex Bis(hexafluoracetylacetonato) nickel(II)tetrapyrazol in einer Ausbeute von 97 % entstanden.

| Elementaranalysendaten: | | |
|---|---|---|
| | theoretisch [%] | ermittelt [%] |
| Ni | 7,9 | 8,1 |
| N | 15,0 | 14,8 |
| C | 35,4 | 35,5 |

Beispiel 5

Die Herstellung von Prepregmaterial erfolgt nach den bekannten Verfahren der Naßtechnologie oder dem hot-melt-Verfahren.

Der Katalysator wird innig im Diglycidether des Bisphenol-A (Rütapox 0164) eingebracht. Wird die Mischung in der Naßtechnologie verarbeitet ist das eingesetzte Lösungsmittel Methylethylketon. Der Harzgehalt des Prepregs beträgt nach beiden Verarbeitungsverfahren 50 Masse-%, der Harzfluß 30 Masse-%.

Die Prepreglagerfähigkeit wird bei Raumtemperatur im Vergleich zu der reinen Lewis-Base dargestellt.

(Die Lagerfähigkeit ist nicht mehr gegeben, wenn der Harzfluß < 10 Masse-% beträgt.)

| | Katalysator nach Beispiel 1 | Lewis-Base Imidazol | Vergleichsvers. Hexa(imidazol)-Ni(II) dinitrat |
|---|---|---|---|
| Naßtechnologie<br>hot-melt | 48 Tage<br>47 Tage | 2 Tage<br>1 Stunde | 7 Tage<br>7 Tage |
| | Beispiel 2 | Pyridin | Hexa(pyridin)-Ni(II)dinitrat |
| Naßtechnologie<br>hot-melt | 73 Tage<br>69 Tage | 5 Tage<br>12 Stunden | 7 Tage<br>7 Tage |

**Patentansprüche**

1. Verfahren zur Herstellung von neutralen Komplexsalzen mit zusätzlich koordinierten Liganden, **dadurch gekennzeichnet**, daß ein komplexbildendes Metallsalz, insbesondere der 2. und 3. Hauptgruppe des Periodensystems der Elemente, sowie der Nebengruppenelemente, mit einem Chelatliganden und einer Lewis-Base in Wasser, evtl. in Gegenwart eines Lösungsvermittlers, unter Verwendung einer anorganischen Hilfsbase, die mit dem Säurerest des eingesetzten Metallsalzes ein lösliches Salz bildet, in stöchiometrischem Verhältnis gemäß der Reaktion

$$M_m^{a+}(SR^{b-})_n + m\,[x\,L \cdot cH + yB] \xrightarrow{\text{anorg. Base}}$$
$$m\{L_xMB_y[SR]_{p-o} + o \cdot SR^{b-} + c \cdot H^+\}$$

mit

- M ein Metallion,
- SR ein Säurerest einer organischen oder anorganischen Säure,
- B eine Lewis-Base und
- L ein Chelatligand, wobei

$$m \cdot a = b \cdot n \geq m\,(c \cdot x)$$

$$x \cdot c \leq a \text{ und } \frac{n}{m} = p,\ o \leq p,\ m \cdot o \leq n \text{ und}$$

a = eine natürliche Zahl im Bereich von 1 - 8,
b = eine natürliche Zahl im Bereich von 1 - 3,
c = eine natürliche Zahl im Bereich von 0 - 4,
m = eine natürliche Zahl im Bereich von 1 - 3,
n = eine natürliche Zahl im Bereich von 1 - 8,
o = eine natürliche Zahl im Bereich von 0 - 8,
x = eine natürliche Zahl im Bereich von 0 - 4,
y = eine natürliche Zahl im Bereich von 8 - 15,

bedeuten, und $x + y + (p - o) \leq 16$ ist,
miteinander durch hohen Energieeintrag zu neutralen Komplexverbindungen umgesetzt und fein kristallin abgetrennt werden.

**2.** Verfahren gemäß Anspruch 1, **dadurch gekennzeichnet**, daß die Umsetzung gemäß einer stöchiometrischen Reaktion erfolgt, in der y eine natürliche Zahl im Bereich von 9 bis 11 bedeutet und die Summe $x + y + (p - o) \leq 12$ ist.

**3.** Verfahren gemäß Anspruch 1 oder 2, **dadurch gekennzeichnet**, daß der Energieeintrag hervorgerufen wird durch Einwirkung hoher Scherkräfte, wie sie im Dissolver, durch Mischsirenen oder extrem hohen Rührerdrehzahlen hervorgerufen werden.

**4.** Verfahren gemäß Anspruch 1 oder 2, **dadurch gekennzeichnet**, daß der Energieeintrag hervorgerufen wird durch Ultraschall, Mikrowelle oder Laserstrahl.

**5.** Verfahren gemäß der Ansprüche 1 bis 4, **dadurch gekennzeichnet**, daß es bei Temperaturen von 0 bis 150 °C durchgeführt wird.

**6.** Verfahren gemäß der Ansprüche 1 bis 4, **dadurch gekennzeichnet**, daß es bei Temperaturen von 20 bis 80 °C durchgeführt wird.

**7.** Verfahren gemäß der Ansprüche 1 bis 6, **dadurch gekennzeichnet**, daß als Lösungsvermittler Ethanol, Propanol oder Dimethylformamid in einer Menge von 0,01 bis 23 Gew.-%, bezogen auf das Gesamtgemisch verwendet wird.

**8.** Verfahren gemäß der Ansprüche 1 bis 6, **dadurch gekennzeichnet**, daß als Lösungsvermittler Ethanol, Propanol oder Dimethylformamid in einer Menge von 5 bis 10 Gew.-%, bezogen auf das Gesamtgemisch verwendet wird.

**9.** Verfahren gemäß der Ansprüche 1 bis 8, **dadurch gekennzeichnet**, daß als anorganische Hilfsbase NaOH, KOH, $Ca(OH)_2$, $Mg(OH)_2$ oder basische Salze, wie z. B. Natriumacetat, Soda oder Pottasche verwendet werden.

**10.** Verfahren gemäß der Ansprüche 1 bis 8, **dadurch gekennzeichnet**, daß die Konzentration der anorganischen Hilfsbase derjenigen der eingesetzten Lewis-Base entspricht.

**11.** Verfahren gemäß der Ansprüche 1 bis 9, **dadurch gekennzeichnet**, daß als Chelatliganden Dioxime, alpha- und β-Hydroxycarbonylverbindungen, also Hydroxycarbonsäuren, -ketone, -aldehyde und deren Analoge oder enolisierbare 1,3-Diketone, insbesondere Acetylaceton, Benzoylaceton und deren Homologe, Dipivaloylmethan oder Dimethylglyoxim, Essigsäure, Oxalsäure, Milchsäure, Weinsäure, Apfelsäure, Fumarsäure, Malonsäure oder CH-acide Lewis-Basen, wie Malonsäurediester oder -dinitril, Acetessigsäureester und Cyanessigester verwendet werden.

**12.** Verfahren gemäß der Ansprüche 1 bis 9, **dadurch gekennzeichnet,** daß als Lewis-Basen Pyridin-, Pyrimidin - oder Imidazolverbindungen, Ether, einschließlich cyclischer Ether, wie z. B. Tetrahydrofuran, aliphatische und aromatische Alkohole, Ketone, Thioether oder Merkaptane, CH-acide Pyridine oder Nitromethan verwendet werden.

**13.** Verfahren gemäß der Ansprüche 1 bis 12, **dadurch gekennzeichnet**, daß es kontinuierlich durchgeführt wird.

**14.** Verwendung der Komplexverbindungen, hergestellt nach einem Verfahren gemäß der Ansprüche 1 bis 13 als einziger Härtungskatalysator für lagerstabile Prepregs.

**15.** Verwendung der Komplexverbindungen, hergestellt nach einem Verfahren gemäß der Ansprüche 1 bis 13 als Härtungskatalysator für Klebemassen.

**16.** Verwendung der Komplexverbindungen, hergestellt nach einem Verfahren gemäß der Ansprüche 1 bis 13, als alleinige Härtungskatalysatoren für Epoxidharze und deren Gemische.

**17.** Verwendung der Komplexverbindungen, hergestellt nach einem Verfahren gemäß der Ansprüche 1 bis 13, als alleinige Härtungskatalysatoren für Polyurethanharze und deren Gemische.

## Claims

**1.** A process for preparing neutral complex salts with additionally coordinated ligands, **characterized in that** a complex-forming metal salt, in particular of the 2nd and 3rd main groups of the periodic system of the elements, and of the transition elements, with a chelate ligand and a Lewis base in water, optionally in the presence of a solubilizing agent, are reacted with one another with a high energy input, using an inorganic auxiliary base, which with the acid residue of the metal salt used forms a soluble salt, in a stoichiometric ratio in accordance with the reaction

$$M_m^{a+}(SR^{b-})_n + m\,[x\,L \cdot cH + yB] \xrightarrow{\text{inorg. base}} m\{L_xMB_y[SR]_{p-o} + o \cdot SR^{b-} + c \cdot H^+\}$$

with

- M a metal ion,
- SR an acid residue of an organic or inorganic acid,
- B a Lewis base and
- L a chelate ligand, wherein

$$m \cdot a = b \cdot n \geq m\,(c \cdot x)$$

$$x \cdot c \leq a \text{ and } \frac{n}{m} = p,\ o \leq p,\ m \cdot o \leq n \text{ and}$$

a = is a natural number in the range of from 1 to 8,
b = is a natural number in the range of from 1 to 3,
c = is a natural number in the range of from 0 to 4,
m = is a natural number in the range of from 1 to 3,
n = is a natural number in the range of from 1 to 8,
o = is a natural number in the range of from 0 to 8,
x = is a natural number in the range of from 0 to 4,

y = is a natural number in the range of from 8 to 15,

and $x + y + (p - o) \leq 16$,
to form neutral compounds and are separated in a fine crystalline form.

2. A process according to Claim 1, **characterized in that** the reaction takes place in accordance with a stoichiometric reaction, in which y signifies a natural number in the range offrom 9 to 11 and the sum $x + y + (p - o)$ is $\leq 12$.

3. A process according to Claim 1 or 2, **characterized in that** the energy input is generated by the action of high shear forces, as generated in the dissolver, by mixing sirens or extremely high stirrer speeds.

4. A process according to Claim 1 or 2, **characterized in that** the energy input is generated by ultrasound, microwave or laser beam.

5. A process according to Claims 1 to 4, **characterized in that** it is performed at temperatures of from 0 to 150°C.

6. A process according to Claims 1 to 4, **characterized in that** it is performed at temperatures of from 20 to 80°C.

7. A process according to Claims 1 to 6, **characterized in that** ethanol, propanol or dimethyl formamide in a quantity of 0.01 to 20% by weight, relative to the total mixture, is used as a solubilizing agent.

8. A process according to Claims 1 to 6, **characterized in that** ethanol, propanol or dimethyl formamide in a quantity of 5 to 10% by weight, relative to the total mixture, is used as a solubilizing agent.

9. A process according to Claims 1 to 8, **characterized in that** NaOH, KOH, $Ca(OH)_2$, $Mg(OH)_2$ or basic salts, such as for example sodium acetate, soda or potash, are used as an inorganic auxiliary base.

10. A process according to Claims 1 to 8, **characterized in that** the concentration of the inorganic auxiliary base corresponds to that of the Lewis base used.

11. A process according to Claims 1 to 9, **characterized in that** dioximes, α- and β-hydroxycarbonyl compounds, *i. e.* hydroxycarboxylic acids, ketones, aldehydes and analogues thereof or enolizable 1,3-diketones, in particular acetylacetone, benzoylacetone and homologues thereof, dipivaloylmethane or dimethylglyoxime, acetic acid, oxalic acid, lactic acid, tartaric acid, malic acid, fumaric acid, malonic acid or CH-acidic Lewis bases, such as malonic acid diester or malonodinitrile, acetoacetic acid ester and cyanoacetic ester are used as chelate ligands.

12. A process according to Claims 1 to 9, **characterized in that** pyridine, pyrimidine or imidazole compounds, ether, including cyclic ether, such as for example tetrahydrofuran, aliphatic and aromatic alcohols, ketones, thioethers or mercaptans, CH-acidic pyridines or nitromethane are used as Lewis bases.

13. A process according to Claims 1 to 12, **characterized in that** it is performed continuously.

14. Use of the complex compounds prepared in accordance with a process according to Claims 1 to 13 as a single curing catalyst for prepregs which are stable in storage.

15. Use of the complex compounds prepared in accordance with a process according to Claims 1 to 13 as a curing catalyst for adhesive compounds.

16. Use of the complex compounds prepared in accordance with a process according to Claims 1 to 13 as sole curing catalysts for epoxy resins and mixtures thereof.

17. Use of the complex compounds prepared in accordance with a process according to Claims 1 to 13 as sole curing catalysts for polyurethane resins and mixtures thereof.

**Revendications**

1. Procédé de préparation de sels complexes neutres avec, en plus, des ligands coordinés, caractérisé en ce qu'un

sel métallique complexant, notamment des 2ème et 3ème groupes principaux de la classification périodique des éléments, ainsi que des éléments des sous-groupes, est mis à réagir, avec un apport d'énergie important, ensemble avec un ligand chélate et une base de Lewis dans de l'eau, éventuellement en présence d'un agent solubilisant, avec emploi d'une base auxiliaire inorganique formant un sel soluble avec le reste acide du sel métallique mis en oeuvre, dans le rapport stoechiométrique selon la réaction

$$M_m^{a-}(SR^{b-})_n + m\ [x\ L\ .\ cH + yB] \xrightarrow{\text{base inorganique}}$$
$$m\{L_xMB_y[SR]_{p-o} + o\ .\ SR^{b-} + c\ .\ H\}$$

avec

- M un ion métallique,
- SR un reste acide d'un acide organique ou minéral,
- B une base de Lewis et
- L un ligand chélate, moyennant quoi

$$m \cdot a = b \cdot n \geq m\ (c \cdot x)$$

$$x \cdot c \leq a \text{ et } \frac{n}{m} = p,\ o \leq p,\ m \cdot o \leq n \text{ et}$$

a = un nombre entier dans la gamme de 1 à 8,
b = un nombre entier dans la gamme de 1 à 3,
c = un nombre entier dans la gamme de 0 à 4,
m = un nombre entier dans la gamme de 1 à 3,
n = un nombre entier dans la gamme de 1 à 8,
o = un nombre entier dans la gamme de 0 à 8,
x = un nombre entier dans la gamme de 0 à 4,
y = un nombre entier dans la gamme de 8 à 15, et x + y + (p - o) est < 16, en formant des complexes neutres et qu'ils sont séparés sous forme de cristaux fins.

**2.** Procédé selon la revendication 1, caractérisé en ce que la transformation a lieu selon une réaction stoechiométrique dans laquelle y signifie un nombre entier dans la gamme de 9 à 11 et la somme x + y + (p - o) est ≤ 12.

**3.** Procédé selon la revendication 1 ou 2, caractérisé en ce que l'apport d'énergie est produit par l'effet de forces de cisaillement telles qu'elles sont engendrées dans le dissolveur, par des sirènes de mélange ou des vitesses de rotation extrêmement élevées du mélangeur.

**4.** Procédé selon la revendication 1 ou 2, caractérisé en ce que l'apport d'énergie est produit par des ultrasons, des micro-ondes ou un faisceau laser.

**5.** Procédé selon les revendications 1 à 4, caractérisé en ce qu'il est conduit à des températures de 0 à 150°C.

**6.** Procédé selon les revendications 1 à 4, caractérisé en ce qu'il est conduit à des températures de 20 à 80°C.

**7.** Procédé selon les revendications 1 à 6, caractérisé en ce que de l'éthanol, du propanol ou du diméthylformamide est employé comme solubilisant en une quantité de 0,01 à 20% en poids par rapport au mélange total.

**8.** Procédé selon les revendications 1 à 6, caractérisé en ce que de l'éthanol, du propanol ou du diméthylformamide est employé comme solubilisant en une quantité de 5 à 10% en poids par rapport au mélange total.

**9.** Procédé selon les revendications 1 à 8, caractérisé en ce que NaOH, KOH, $Ca(OH)_2$ ou des sels basiques, tels que par ex. l'acétate de sodium, le carbonate de sodium ou le carbonate de potassium, sont utilisés comme bases auxiliaires inorganiques.

**10.** Procédé selon les revendications 1 à 8, caractérisé en ce que la concentration de la base auxiliaire organique correspond à celle de la base de Lewis mise en oeuvre.

**11.** Procédé selon les revendications 1 à 9, caractérisé en ce que des dioximes, des composés alpha- et β-hydroxycarbonyles, à savoir des acides hydroxycarboxyliques, des hydroxycétones, des hydroxyaldéhydes et leurs analogues ou des 1,3-dicétones énolisables, notamment l'acétylacétone, la benzoylacétone et leurs homologues, le dipivaloylméthane ou la diméthylglyoxime, l'acide acétique, l'acide oxalique, l'acide lactique, l'acide tartrique, l'acide malique, l'acide fumarique, l'acide malonique ou des bases de Lewis à CH acide, telles que les diesters maloniques ou le dinitrile malonique, les esters acétylacétiques et les esters cyanacétiques sont utilisés en tant que ligands chélates.

**12.** Procédé selon les revendications 1 à 9, caractérisé en ce que des composés pyridiniques, pyrimidiniques ou imidazoliques, des éthers, y compris des éthers cycliques, tels que par ex. le tétrahydrofuranne, des alcools aliphatiques et aromatiques, des cétones, des thioéthers ou des mercaptans, des pyridines à CH acide ou du nitrométhane sont utilisés comme bases de Lewis.

**13.** Procédé selon les revendications 1 à 12, caractérisé en ce qu'il est conduit en continu.

**14.** Utilisation des complexes préparés d'après un procédé selon les revendications 1 à 13 comme catalyseur de durcissement unique pour des préimprégnés stables au stockage.

**15.** Utilisation des complexes préparés d'après un procédé selon les revendications 1 à 13 comme catalyseur de durcissement pour adhésifs.

**16.** Utilisation des complexes préparés d'après un procédé selon les revendications 1 à 13 comme catalyseurs de durcissement uniques pour des résines époxydiques et leurs mélanges.

**17.** Utilisation des complexes préparés d'après un procédé selon les revendications 1 à 13 comme catalyseurs de durcissement uniques pour des résines de polyuréthannes et leurs mélanges.